# EUROPEAN PATENT APPLICATION

(11) **EP 1 102 510 A1**
(43) Date of publication of application: **23.05.2001**
(21) Application number: 99120291.2
(22) Date of filing: 12.10.1999
(51) Int. Cl.: H04Q 7/38

(54) **Location system for mobile telephones**

(71) Applicant: Sakarya, Taskin, 70825 Korntal-Münchingen (DE); Yazar, Aydin, 70435 Stuttgart (DE)
(72) Inventor: Sakarya, Taskin, 70825 Korntal-Münchingen (DE); Yazar, Aydin, 70435 Stuttgart (DE)
(74) Representative: Witte, Alexander, Dr.-Ing.

(57) **Abstract**

A mobile telephone equipment comprising a plurality of stationary transmitter/receiver stations which are distributed over a predetermined area, each of said transmitter/receiver stations covering a predetermined area portion of said area and continuously or intermittently sending a transmitter/receiver station identification signal within the respective area portion, and at least one mobile telephone adapted to receive one or more transmitter/receiver station identification signals from one or more of said transmitter/receiver stations, characterized in that said mobile telephone comprises a converter utilizing signal measurements for converting and calculating said one or more transmitter/receiver station identification signals and signal measurements into geographical area portion information which can be displayed on the mobile telephone or otherwise used by an user of the mobile telephone.

## Description

### 3.0 Foreword on this New Feature

It is the start of something new and big! Now another new era in the use of mobile equipment starts. Mobile telephone with this feature shall have more power and be a lot more in use. Marketing shall further boom!

It shall be possible to utilise the location info of the mobile for various purposes. Not only is it possible for the mobile owner, quickly inform any other her/his location, but also ask the various system resources, including the mobiles own resources, for guidance of various nature!

For example the mobile owner shall be informed of the hotels, banks, cinemas, theatres, night clubs, shops, museums around her/him, upon request.

For example the mobile owner shall be able to drive around the world, without maps, guide books.

For example the mobile owner shall inform her/his friends, partners, manager where she/he is heading, with only a touch of a couple of keys and with very little cost.

In private or at work, the mobile owners shall not do without these features described by this licensee.

Business people shall be able to advertise on mobiles. It shall be easier for them to reach to public.

As it shall be seen within later chapters, this licensee document offers not only one very important feature. It offers 5 very important new features.

### 4.0 Feature Description and Use

Figure 1 displays the features in a graphical form.

### 4.1 As geographical location informer

**a)** Fast location information of transporters, lorries, trucks
**b)** Fast location information of people in need, i.e. emergency help situations
**c)** Fast location information of travellers to others

An additional/optional information byte can be added to the location info. This optional additional byte shall send further data from the location, with fast key selection options. The use of this extra byte shall be for example as to give info on the traffic state as free, slow running or traffic jam, in the case of location info from transporters. Or this additional info shall give emergency level indication in case of emergency calls.

The sending of the location info data (+ additional info) shall be done via Mobile SMS.

Five possible sources of the location info is available to the mobile owner.
(I) Bought plug_in location info module (local, nation-wide, world-wide info depending on the availability and memory capacity)
(ii) Reception of the location info from the system via System Info(BSS). Free use. No telephone calls is necessary.
(iii) Reception of the location info from the system via info downloads as part of location update procedures. Free use. No telephone calls is necessary.
(iv) Reception of the location info from the system via SMSCB. Free use. No telephone calls is necessary.
(v) Reception of the location info from an info centre (internet or PLMN centre) via call connect.

For all the possibilities, the only cost is for SMS sending of the location string to another party. SMS cost is reasonably small.

### 4.2 As personal city guide

Categorised information of hotels, banks, cinemas, theatres, night clubs, shops, museums shall be displayed by the mobile immediately and as per request. The display is based on present location of the mobile and only the data within the immediate vicinity of the mobile owner are given. I.e. the mobile owner is able to know what is around her/him at a reachable distance.

Five possible sources of this information is available to the mobile owner.
(I) Bought plug_in city guide info module (local, nation-wide, world-wide info depending on the availability and memory capacity).
(ii) Reception of the location info from the system via info downloads as part of location update procedures. Free use. No telephone calls is necessary.
(iii) Reception of the city guide from the system via SMSCB. Free use. No telephone calls is necessary. Download is made to a plug_in memory module. SMSCB is not something new. However, selective filtering by BSS is offered by this licensee. i.e. not a lot of unsorted SMS broadcast, but instead only filtered data. Filtering SW at BSS separates the SMS broadcast data depending on cell locations and then transmit them separately to different locations.
(iv) Reception of the location info from an info centre (internet or PLMN centre) via call connect. The download of city guide however can be done only once. The local memory of the equipment shall store the data for future use.
(v) Similar to (iv), except only the requested information is transferred by the info site upon request and not the complete download.

### 4.3 As path finder

In case the mobile owner is searching for an address (location, street etc.), the mobile equipment itself shall give directions depending on the present location of the mobile equipment. If the distance is grosser than a walking distance, then main road directions shall be listed. If the searched address is within the walking distance, then the mobile equipment shall warn, when the mobile owner goes in the wrong direction.

Five possible sources of the location is available to the mobile owner.
(I) Bought plug_in location mapping (street matrix tables) info module (local, nationwide, world-wide info depending on the availability and memory capacity) and related advance programs.
(ii) Reception of the location mapping info from the system via info downloads as part of location update procedures. Free use. No telephone calls is necessary. Mobile local advance location processing programming is needed.
(iii) Reception of the city guide from the system via SMSCB. Free use. No telephone calls is necessary. Download is made to a plug_in memory module.
(iv) Reception of the location mapping info from an info centre (internet or PLMN centre) via call connect. The download of city guide however can be done only once. The local memory of the equipment shall store the data for future use.
(v) Similar to (iv), except only the requested information is transferred by the info site upon request and not the complete download.

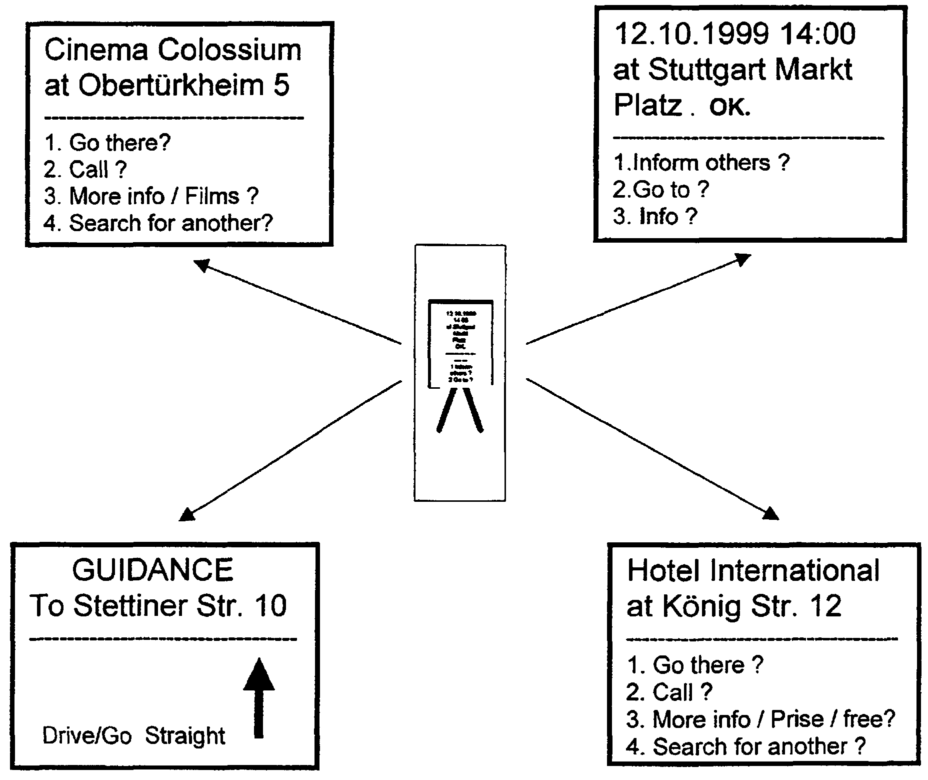

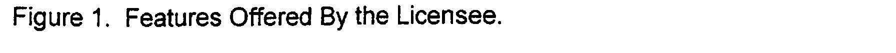

### 4.4 As auto direction guide

In case the mobile owner is searching for an address (location, street etc.), the mobile equipment itself shall give directions depending on the present location of the mobile equipment. Directions are based on motorways and other traffic roads. For the directions, the priority are given to main roads.

Three possible sources of the long/short distance guidance is available to the mobile owner.
(I) Bought plug_in area mapping (street matrix tables) info module (local, nationwide, world-wide info depending on the availability and memory capacity) and related advance programs.
(ii) Reception of the location mapping info from an info centre (internet or PLMN centre) via call connect. The download of city guide however can be done only once. The local memory of the equipment shall store the data for future use.
(iii) Similar to (ii), except only the requested information is transferred by the info site upon request and not the complete download.

### 5.0 General Principles

Mobile Equipment's position is always tracked down by the Mobile's GSM system via equipment's Location Update Requests, using Location Area Identification. Mobile's Location Area Identification info is kept within HLR.

The position of the mobile equipment, i.e. LAI, is not only saved within HLR and eventually VLR, but also detected and saved within the mobile equipment itself within the SIM card.

LAI alone is not good enough to localise a mobile equipment. With LAI+other info (refer to 8.0) however, it is possible to determine a mobile in short ranges. This shall in future further improve. Because mobile equipment is a sophisticated self measuring equipment, given enough parameters and location algorithms, it shall be easily possible for it to estimate the exact geographical position.

### 6.0 Privacy Acts and Safety of Personal Info

A third party person should not be able to directly access this information in HLR to know where a certain mobile is, due to "privacy acts and security of personal data acts", without prior knowledge and information of the particular mobile owner.

However, these privacy acts and security of personal data acts do NOT apply anymore, when the person himself passes this information to another person at any point of time and place.

### 7.0 Implementation Strategies

There are two alternative implementation strategies of the feature, where "alternative b" has the global solution.
**a)** Mobile equipment translates the received LAI + other info itself to a string of characters relevant to the geographical location and makes it available as an SMS message and be sent with fast key combinations. See Appendix A for the details of the MS received, measured, evaluated information fields. The guiding information is also evaluated ,in relation to the present location, ms and displayed via internal programs.
**b)** The location strings corresponding to the related LAIs are kept locally by the BSC's and other related info by the BTS's, so that there is no need anymore to store the whole "LAI+other info" vs. location string tables within the mobile equipment. This phase requires a global update of the radio link, air interface and GSM L3 specifications for Mobility Management. It enables however a world-wide use of the feature without any restriction. Normally BTSs need to have simply a new data base parameter as for TRX antenna locations string. This location info shall be broadcasted from BCCH channels, indicating the exact location of the antennas for each cell. Such that upon camping on the cell, the mobile equipment shall read the location string from the broadcast channel's system info. Mobile equipment needs further to do measurements on the other cells as usual and depending on different signal strength levels determine the exact location. Mobile optionally can give this location info back to the system with an extra parameter indicating the type of request, upon which the related data can be given to the mobile as SMS messages or via a short connection. Depending on the location updates made by the mobile at a given time period and the direction request for example, it shall be possible by the system (or by the mobiles own memory chip) to determine the best possible route for the travelling mobile owner. Info download can also take place as part of the location update procedures, immediately following a successful location update and before the dedicated channel get released.

As seen from the descriptions, it shall be advisable to combine both alternatives (a) and (b) into a more powerful access into the futures. I.e. plug_in modules, plug_in memories and use of broadcasted system info from PLMN, use of broadcasted SMS info from PLMN, use of location update procedures for download, use of special purpose calculation sites (possibly internet or other new dedicated centres, such as personal traffic guidance systems) shall be combined. See 12.0 for conclusions.

Some of the information given here is only repeated GSM info, to give a better picture of the features, offered by the licensee.

### 8.0 LAI + Other Information

Location Area Identifier is defined in GSM 04.08 10.5.1.3 as 1 octet of Location area code 2 octets (3 digits) of Mobile Country Code, 1 octet (2 digits) of Mobile Network Code and 2 octets of Location Area Code, i.e. overall 6 octets.

"Coding of the LAI is the responsibility of each administration. Coding using full hexadecimal representation may be used."

Several other information fields are available at the mobile equipment and also at the BSS.
* Cell identification (CEI)
* Timing Advance (TA) value
* Neighbouring Cell Measurement Values
* Previous Location Updates in a given time period

All this info, i.e. LAI + other information, combined into a translation table makes it possible to translate the location of the mobile equipment to a smaller, exact geographical area and can be utilised extensively by the mobile equipment owner herself/himself.

LAC values can contain several cells or individual cells, depending on the administration. It is usual to have several cells defined by the same LAC value within high density occupancy areas.

Therefore, it shall be necessary to combine the LAC value with the cell identification information to reduce the location to a smaller location area circle.

The use of TA value however reduces the circle into a distance of multiples of 550 metre away from TRX antenna. TA ranges from 0:63. So a value of 2 indicates the mobile to be in a disc range of 1100 metre to 1650 metre around the TRX antenna.

The exact slide of this disc can be determined via measurements of the neighbouring cells. MS makes quality measurements of the neighbouring cells and send it as a list to BSS during the location updating procedures. See 4.3 for more details. MS is normally closer to the neighbouring cells location with the second best reception quality to the one it is presently using for location updating procedures.

MS can keep tract of the last location updates and their time stamps. If the mobile equipment is not switched off, this location update history shall give routing info, either as personal guidance in city or during a long distance travel.

### 9.0 Mobile Equipment's Location Translations

This part applies for the "initial implementation A".

Since LAI values are reserved and allocated per administration base, their corresponding geographical locations are also the responsibility of administrators. The administrators maintain a list of LACs against geographical locations where they have installed TRX antennas.

Such a "LAI+other info vs. location string" is to be obtained and updated with each update of the network plan and distributed to mobile equipment. Due to possibly many updates, it shall be difficult to maintain a one time load of these tables into the mobile equipment's. Besides, it shall be at first difficult to maintain a wide area i.e. country wide, eu wide, world wide etc.. Therefore, it shall be best to have optional additional slide_in (plug_in) cards (similar to sim cards), which can be distributed and updated via the administrator (mobile provider/operator).

Such plug_in cards are needed also to keep other types of info, such as city guide info and road maps.

See Appendix B, for a simple example of determination of the exact location.

### 10.0 BSS Standards Solution to Location Informer

There are three possible sources to make the features global. All these alternatives require none or very little change to the standards, except changes to procedures and implementations.

### 10.1 Cell Name String via System Info Broadcasts

BSS (BSC and BTS) need to broadcast on each arfcn (i.e. per cell) the cell antenna location on BCCH System Info message. For this either a new System Info, for example System Info type 10, needs to be defined or System Information Type 7 or 8 can be re-used for this purpose.

Following structure is proposed but could be adapted depending on the decision of the related standards institutes.

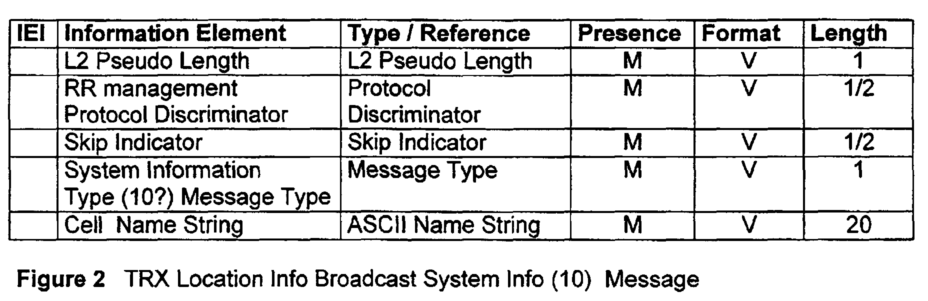

So it shall be possible for the mobile to copy the CNS "cell name string" information from the serving cell and the neighbouring cells and give qualitative information by referencing them. For a simple display, it shall give the name of the serving cell and then the names of one or more (possibly up to 3) of the nearest neighbouring cells, in order. The ordering of the cells are based on received signal strengths from the cells.

Mobile equipment does not need to do location update procedures, if it moves from one cell to another of the same LAI. However, if it starts location update procedures, a connection to the BSS and NSS is made.

### 10.2 Cell Name String via Location Update Requests

In case of location updates, it shall be possible for BSS (and/or NSS) to download cell name strings to MS for one LAI, as part of the location update procedures.

The information shall be supplied by a PLMN dedicated info centres or by interconnected dedicated special internet sites, to the location update procedures.

In case of location updates, it shall be possible for BSS (and/or NSS) to download info pages such as city guide, location maps to MS for one LAI, as part of the location update procedures.

Depending on the update history vs. time stamps, it shall be possible for BSS (and/or NSS) to determine if the mobile owner is travelling by car or on foot. This info can also be determined by the type of cell being camped on, i.e. large cell, small cell or micro cell (see Appendix C).

If the mobile equipment is travelling longer distances, then BSS (and/or NSS)

### 11.0 Mobile Equipment's User Interfaces

Mobile equipment itself shalt have updated user interface menu to enter / change one telephone number for SMS location info sent. The mobile equipment's SW update shall access the LAIs vs. location string table and shall output the location string as SMS, if translation is possible. If translation is not possible, it shall NOT send any SMS message, but instead shalt display a warning both via display and/or via warning sound.

### 12.0 Conclusions

Mobile equipment's HW and SW needs to be updated.

There is very little change (if any) on the GSM standards, except the procedures and implementation strategies and global agreements are impacted.

There is complete new marketing aspects for various different industries.

### 12.1 MS HW Updates

Mobile telephone equipment HW needs to be updated with two optional removable slide_in (plug_in) chip modules.
(i) Combination of separate info modules, such as :
   (a) Geographical area / location lists against LAI + other info (own and neighbouring cell signal measurements, TA value, list of previous camped on cell list with date/time stamps, previous location update list with date/time stamps).
   (b) List of area dependant info, such as Hotels, Banks, Theatres, Cinemas, Night Clubs, Shops, Travel Agencies....
(ii) Memory module. Since the mobile equipment using the features listed here shall need download of updated info on geographical locations, local info, area dependent info, it shall be possible for the mobile to upgrade its mobile capabilities optionally and as needed.

Additionally Monitor and keyboard connectivity. Until now for internet connections an interface to notebooks is considered to be the only choice. However, with this licensee, it is offered to the mobile equipment producers to improve their HW interface for a simple LCD monitor. Such portable monitors can then be attached via cable or cable less extensions to the drive_board of the vehicles for info handling and can also be used by others as remote/large display panels for easy use of data. Similarly a keyboard interface shall ease the SMS data input and internet selection inputs from the mobile user owner.

### 12.2 MS SW Updates

Mobile telephone equipment SW needs to be updated as in following:
(i) User menu update, to allow location info SMS sending with short key or keys combination, to a user predefined telephone number or group of numbers.
(ii) A program which accesses the location data tables with the mobile cell / channel measurements and other available info and outputs a string (for example "Loc=Stuttgart Zuffenhausen Unterlander Str. Ludwigsburger Str.") ready for SMS sending to predefined numbers.
(iii) A program which makes it possible to do fast access and download of certain internet or PLMN info site mobile tables into the MS memory area. Data is kept in the memory areas even at MS power_off, until new replacing data is downloaded.
(iv) A program which makes it possible to store received SMS data tables in a categonsed order into MS memory area and keep the data (even at switch off) until next update.
(v) A program which outputs direction guiding messages based on location info and received requested location. This program should accept inputs as streets, area names or info cites such as hotels, banks, public service areas, cinemas, shops etc...

### 12.3 Marketing Aspects of The Features By the Licensee

Following marketing aspects can be considered:
* Mobile telephone equipment with the features supplied by this licensee shall be sold a lot more than the others.
* A new market shall establish supplying different plug_in info modules and plug_in memory modules.
* A new market shall establish collecting advertisement from various business to insert them into the plug_in modules or into SMS broadcast centre or into (internet or PLMN info site) guidance centre.
* A new market shall establish producing attachable LCD/TFT small monitors. This monitors can be build separately for autos for example and via remote or cable connections be attached to mobile telephones.

### 12.4 Overall Features Offered By the Licensee

* General concepts of the features
   a) Location informer
   b) Personal city guide
   c) Path finder
   d) Auto direction guide
   e) Monitor (+keyboard) connectivity to mobiles
* Technical implementation concepts of the features
   a) Mobile Equipment implementing the whole or part of the features using plug_in info modules.
   b) Mobile Equipment implementing the whole or part of the features using plug_in memory modules to download the info from different sources.
   c) Mobile Equipment as location finder using broadcast info (for example system info messages) via radio broadcast channel (BCCH).
   d) Mobile Equipment implementing the whole or part of the features using filtered SMS broadcast info.
   e) Mobile Equipment implementing the whole or part of the features using location update features as for downloading the related info.
   f) Mobile Equipment implementing the whole or part of the features using internet or PLMN dedicated info and info processing sites.

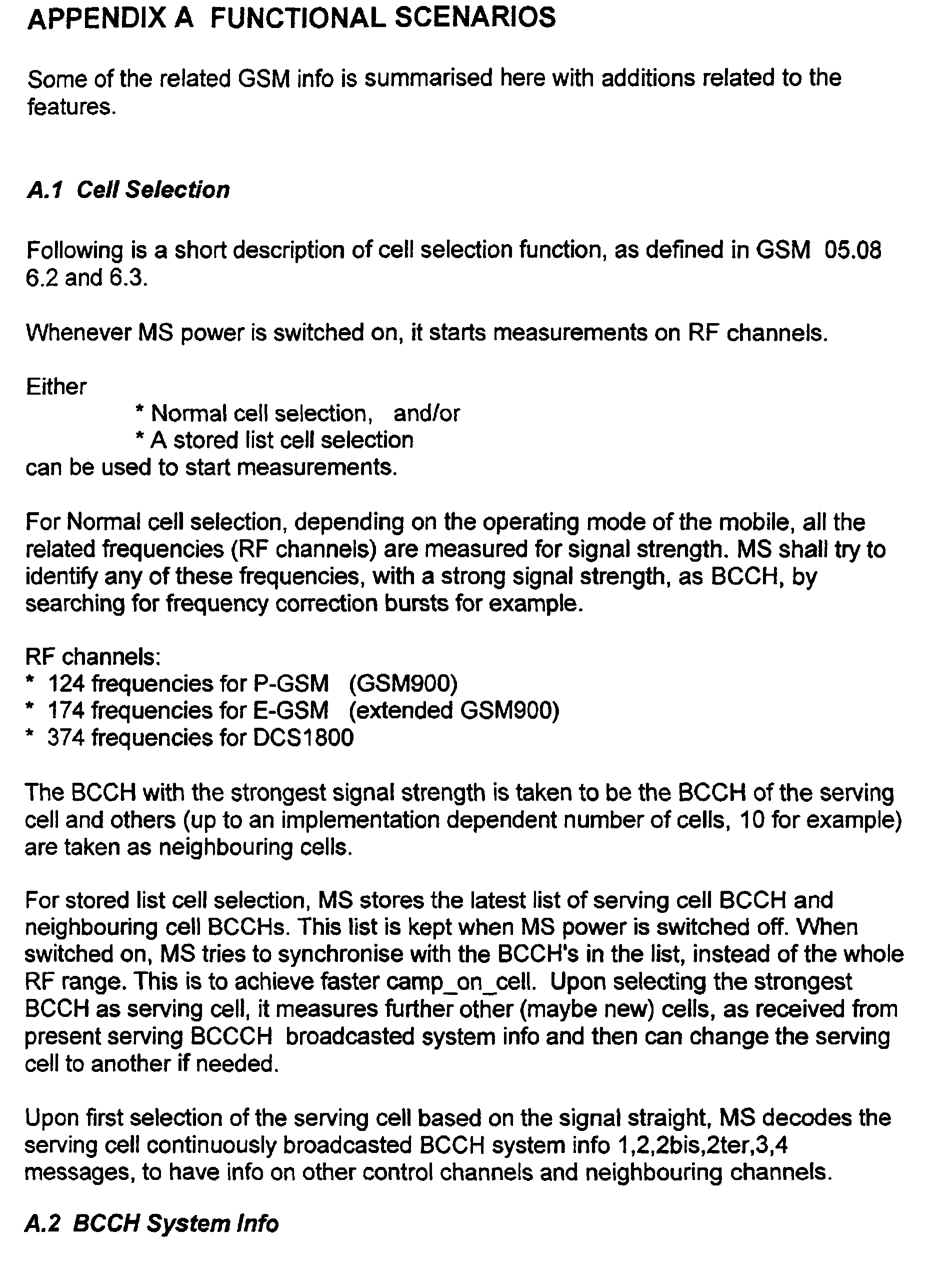

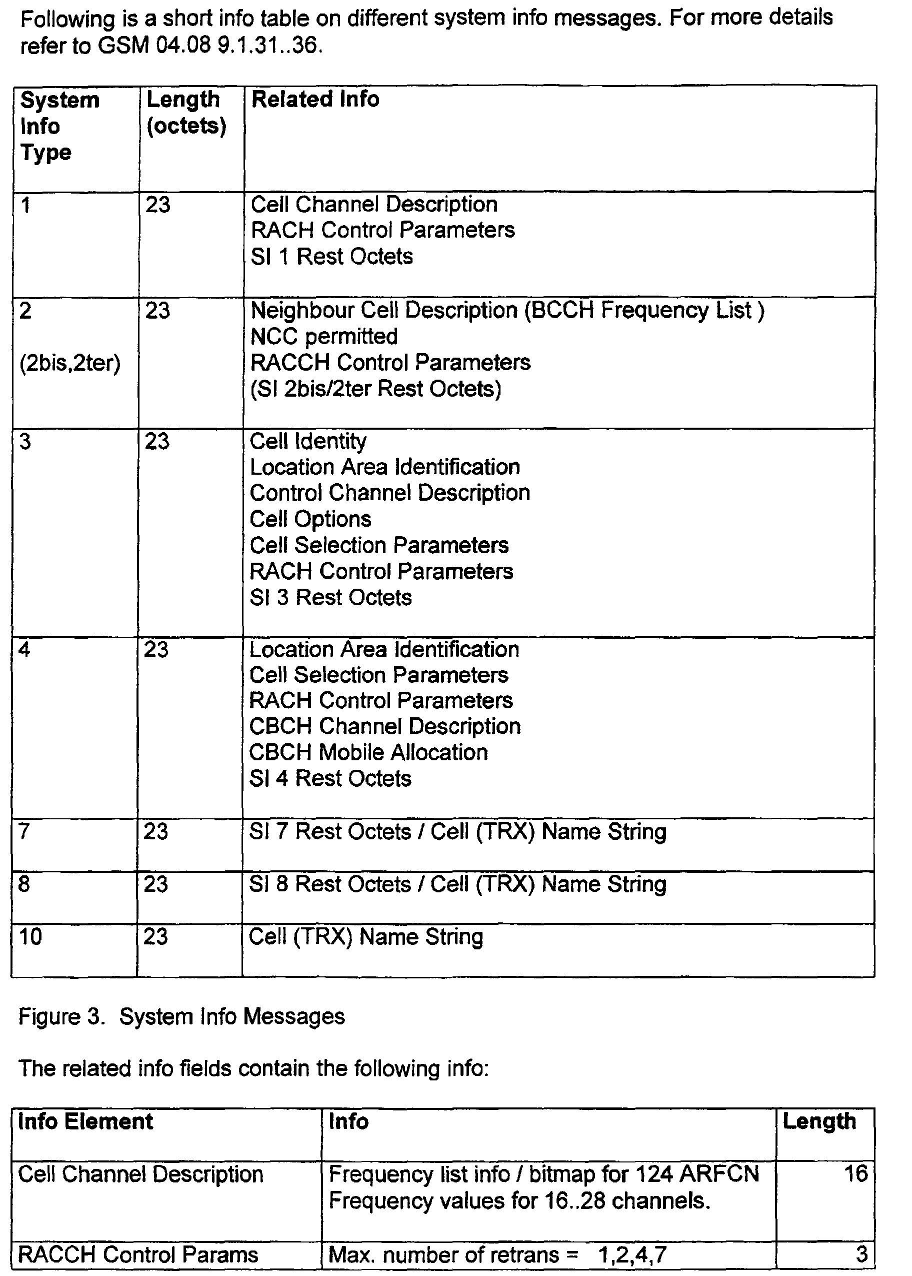

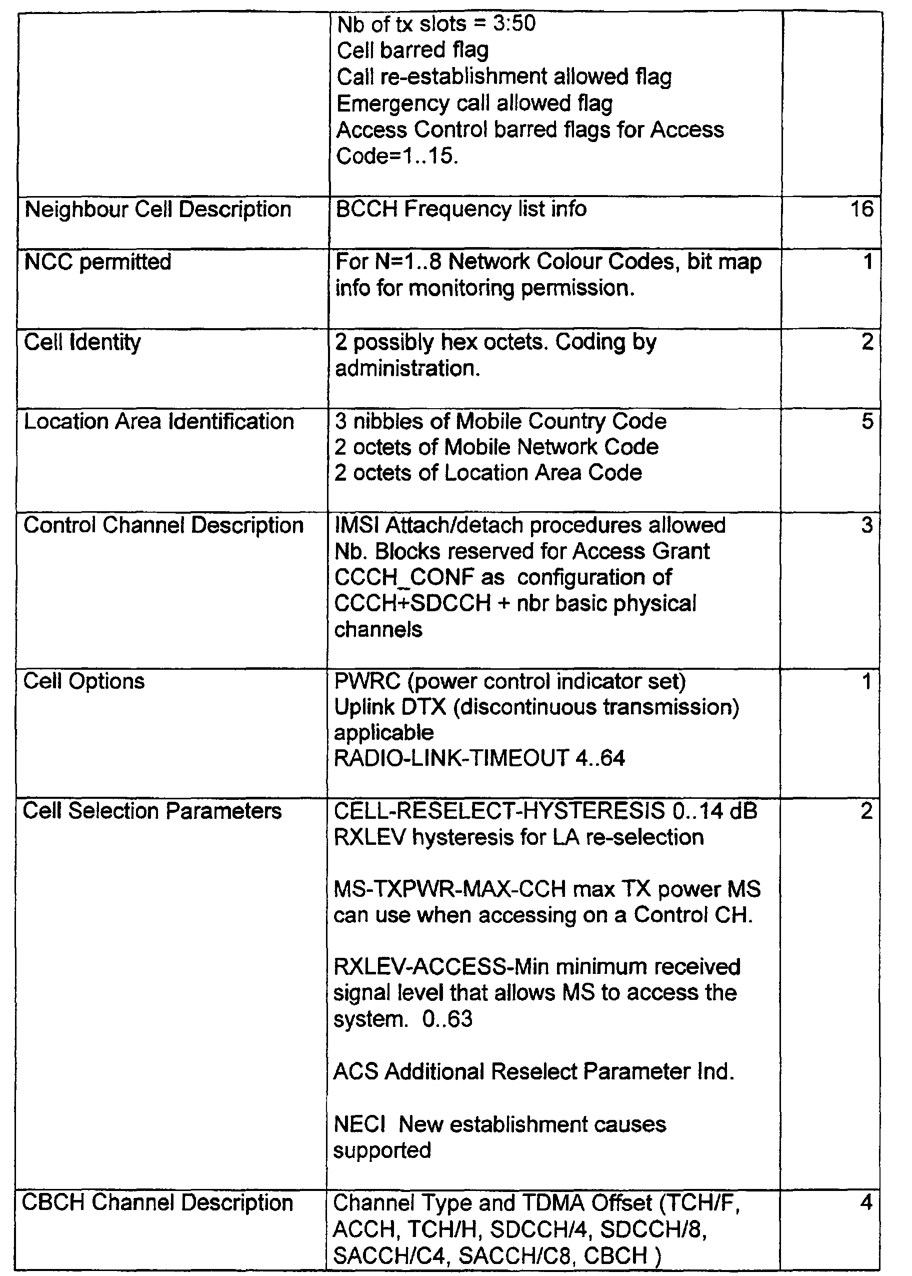

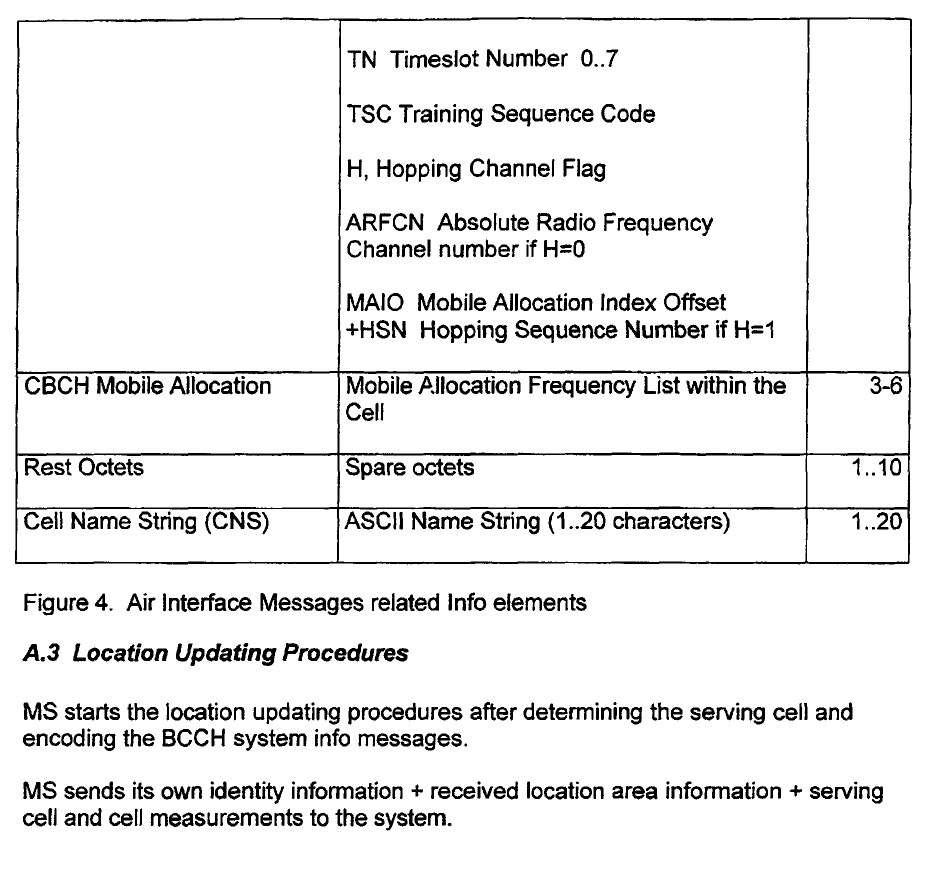

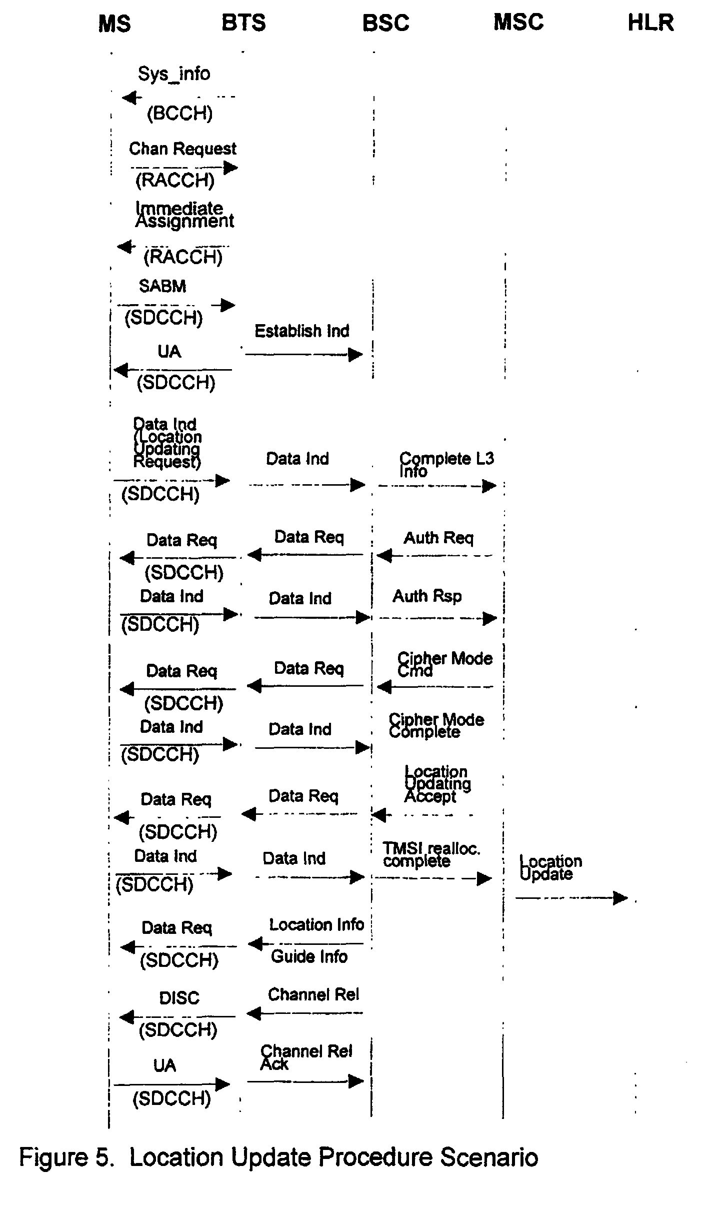

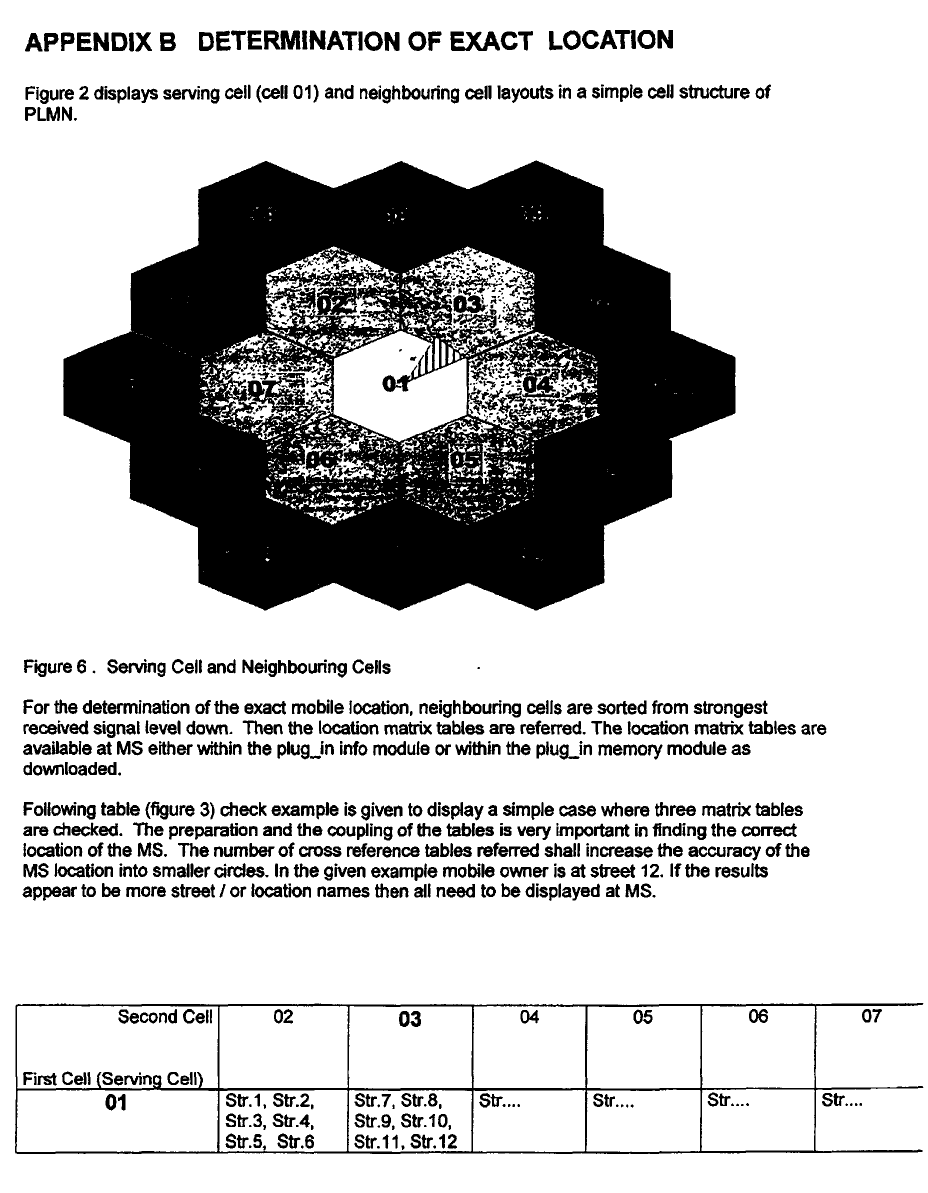

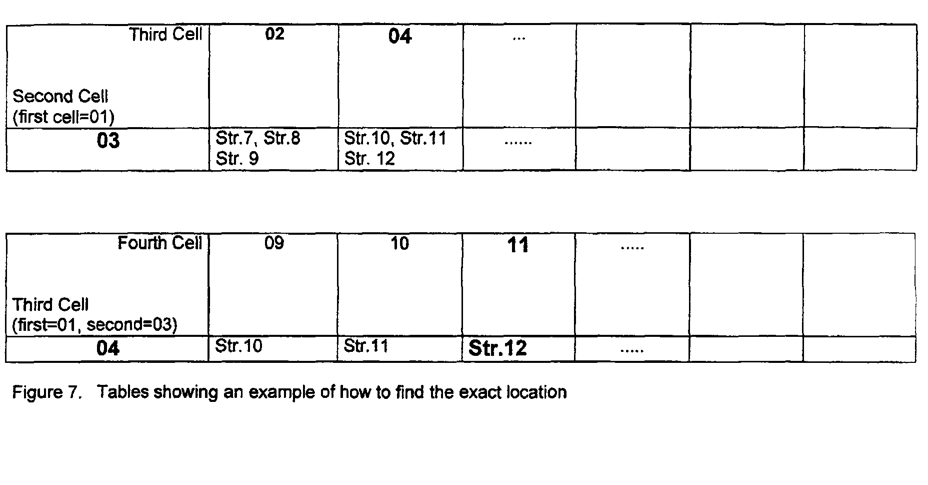

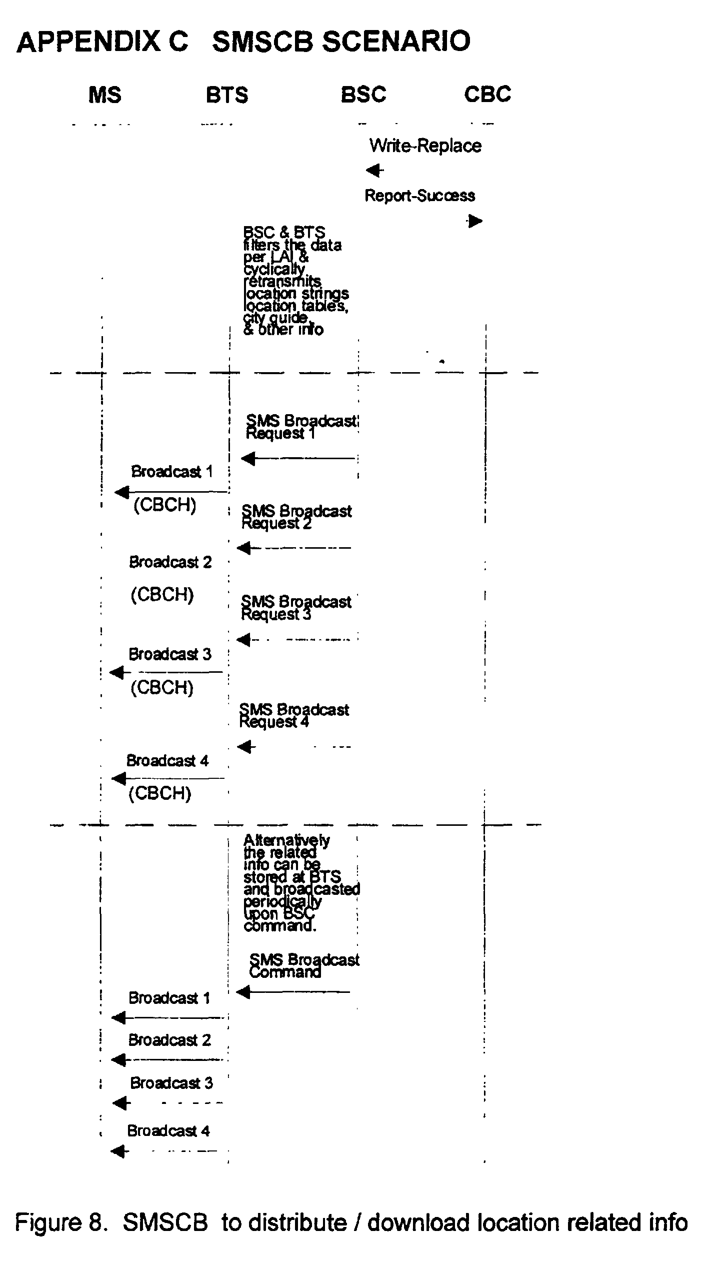

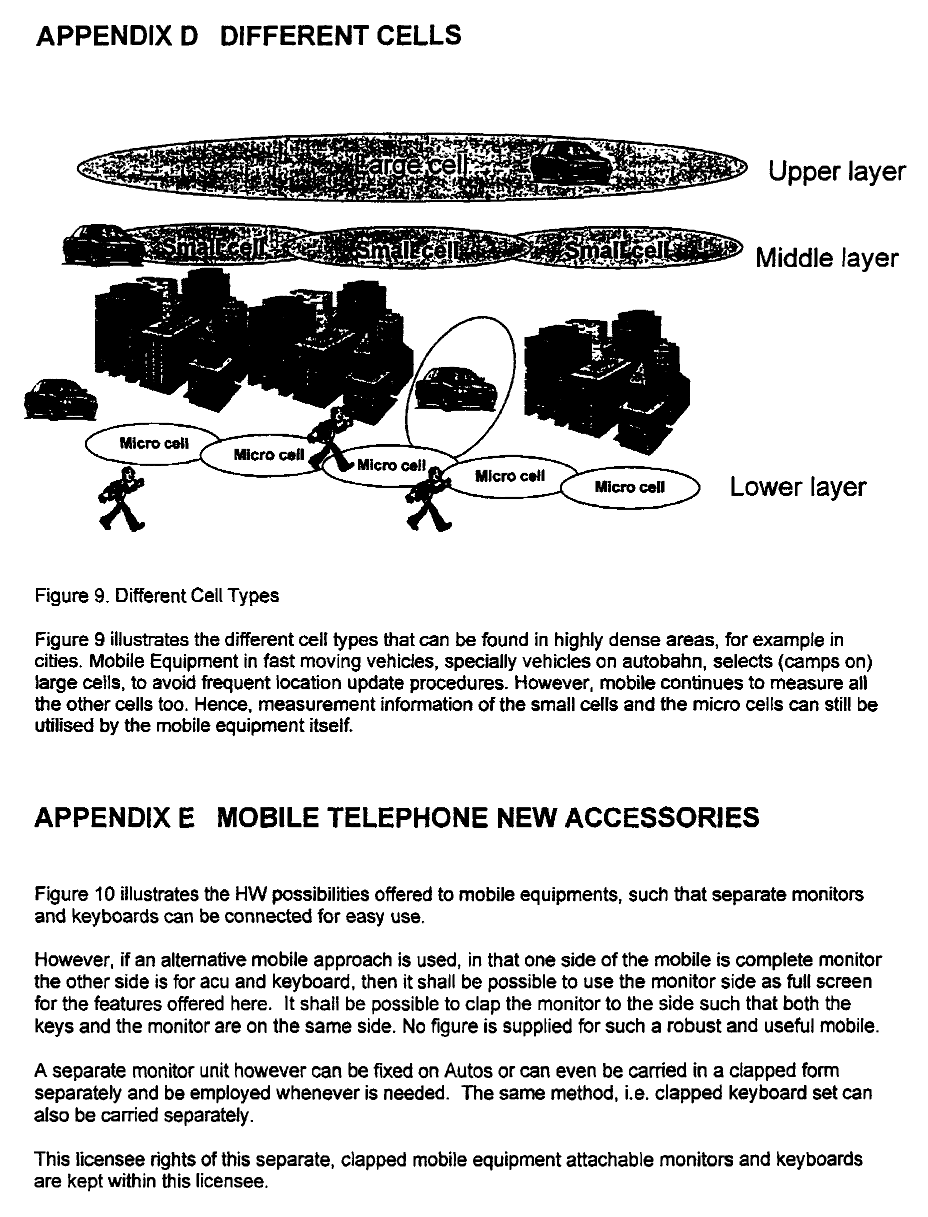

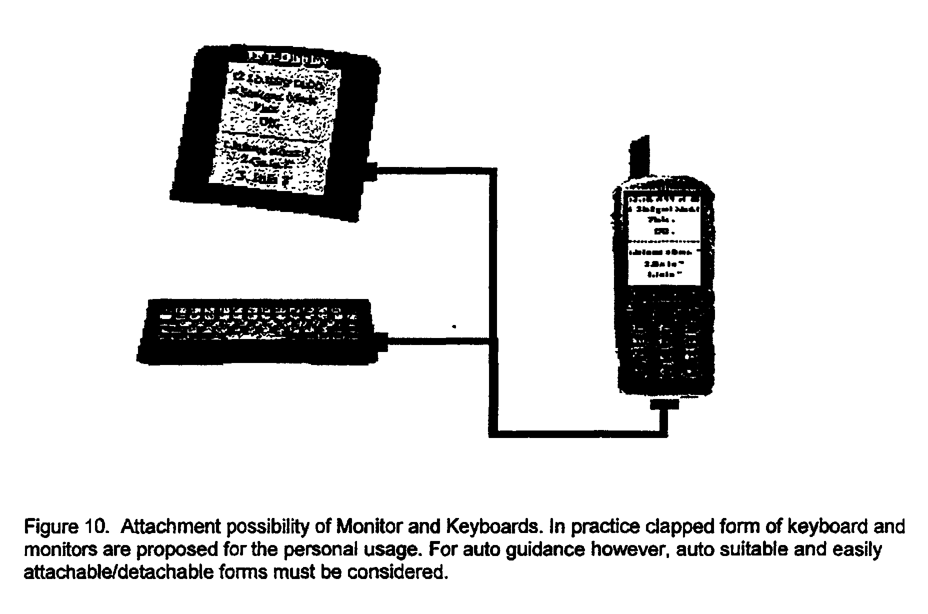

### 1.0 Nominative References

GSM 01.04 (ETR 100): "Digital cellular telecommunications system (Phase 2); Abbreviations and acronyms".
GSM 03.22 (ETS 300 535): "Digital cellular telecommunications system (Phase 2); Functions related to Mobile Station (MS) in idle mode".
GSM 03.30 (ETR 103): "Digital cellular telecommunications system (Phase 2); Radio network planning aspects".
GSM 03.41 (ETR 103): "Digital cellular telecommunications system (Phase 2); Technical realisation of Short Message Service".
GSM 04.08 (ETS 300 557): "Digital cellular telecommunications system (Phase 2); Mobile radio interface layer 3 specification".
GSM 05.01 (ETS 300 573): "Digital cellular telecommunications system (Phase 2); Physical layer on the radio path".
GSM 05.02 (ETS 300 574): "Digital cellular telecommunications system (Phase 2); Multiplexing and multiple access on the radio path".
GSM 05.05 (ETS 300 577): "Digital cellular telecommunications system (Phase 2); Radio transmission and reception".
GSM 05.08 (ETS 300 578): "Digital cellular telecommunications system (Phase 2); Radio subsystem link control".
GSM 05.10 (ETS 300 579): "Digital cellular telecommunications system (Phase 2); Radio subsystem synchronisation".
GSM 05.22 (ETR 284): "Digital cellular telecommunications system (Phase 2); Radio link management in hierarchical networks".
GSM 08.08 (ETR 284): "Digital cellular telecommunications system (Phase 2); Mobile -services Switching Centre . Base Station System (MSC-BSS) interface".

### 2.0 Related Abbreviations

- ARFCN: Absolute Radio Frequency Channel Number
- BCCH: Broadcast Control Channel
- BSS: Base Station Subsystem (BSC+BTS)
- BSC: Base Station Controller
- BTS: Base Transceiver Station
- CC: Call Control
- CBC: Cell Broadcast Centre
- CBCH: Cell Broadcast Channel
- CCCH: Common Control Channel
- CNS: Cell Name String
- GSM: Groupe Special Mobile
- HLR: Home Location Register
- IEI: Info Element Identifier
- LAC: Location Area Code
- LAI: Location Area Identification
- MCC: Mobile Country Code
- MM: Mobility Management
- MNC: Mobile Network Code
- MS: Mobile Station (mobile equipment)
- NCC: Network Colour Code
- NSS: Network Subsystem
- PLMN: Public Land Mobile Network
- SMSCB: Short Message Service Cell Broadcast
- SDCCH: stand-alone Dedicated Control Channel
- SMS: Short Message Service
- RR: Radio Resources
- TA: Timing Advance
- TRX: Transceiver (Transmitter Receiver Antenna)
- VLR: Visiting Location Register

## Claims

1. A mobile telephone equipment comprising
- a plurality of stationary transmitter/receiver stations which are distributed over a predetermined area, each of said transmitter/receiver stations covering a predetermined area portion of said area and continuously or intermittently sending a transmitter/receiver station identification signal within the respective area portion, and
- at least one mobile telephone adapted to receive one or more transmitter/receiver station identification signals from one or more of said transmitter/receiver stations,
characterized in that
said mobile telephone comprises a converter for converting said one or more transmitter/receiver station identification signals into area portion information which can be displayed on the mobile telephone or otherwise used by an user of the mobile telephone.

2. The mobile telephone equipment of claim 1, characterized in that said area portion information is information on the actual geographic location of the mobile telephone.

3. The mobile telephone equipment of claim 2, characterized in that the mobile telephone is movable to within specific area sub-portions of specific area portions, and is adapted to receive more than one transmitter/receiver station identification signal and to detect the field strength of each of said received transmitter/receiver station identification signals, and that the converter comprises an area sub-portion calculator for determining the specific area sub-portion where the mobile telephone is actually located on the basis of the detected field strengths.
